# EUROPÄISCHE PATENTANMELDUNG

(11) **EP 0 986 239 A2**
(43) Veröffentlichungstag der Anmeldung: **15.03.2000**
(21) Anmeldenummer: 99110337.5
(22) Anmeldetag: 28.05.1999
(51) Int. Cl.: H04M 11/00, G08C 17/02, F24F 11/00, F24D 19/10

(54) **Eingabesystem und Verfahren zur Eingabe von Prozessparametern**

(30) Priorität: 10.09.1998 DE 19841476
(71) Anmelder: Electrowatt Technology Innovation AG, 6301 Zug (CH)
(72) Erfinder: Van Puyenbroeck, Georges, 6343 Rotkreuz (CH); Illi, Bruno, 6010 Kriens (CH)

(57) **Zusammenfassung**

Die vorliegende Erfindung beschreibt ein Eingabesystem und ein Verfahren zur Eingabe von Prozessparametern einer Steuer/Regeleinrichtung (2), beispielsweise einer Heizungs- oder Klimaanlage oder mit dieser verbundener Komponenten, mit mindestens einer Kommunikationsschnittstelle (8, 12) eines Eingabegeräts (1) zur Kommunikation mit einer Kommunikationsschnittstelle (9, 10) der Steuer/Regeleinrichtung (2), und mit Anzeige-/Bedienfelder (6, 7), die sich am oder aufdem Eingabegerät (1) zur Anzeige und Eingabe unterschiedlicher Prozesszustände und/oder Prozessparameter befinden, wobei das Eingabegerät zusätzlich Mittel (8) zur Übertragung von Daten per Funk über ein Funktelefonnetz aufweist. Das Eingabegerät (1) ist über diese Mittel (8) zur Übertragung von Daten per Funk einerseits als Telefon verwendbar und über die mindestens eine Kommunikationsschnittstelle (8, 12) oder die Mittel (8) zur Übertragung von Daten per Funk durch die Steuer/Regeleinrichtung (2) andererseits derart ansteuerbar, dass die Anzeige-/Bedienfelder (6, 7) zur Anzeige und Eingabe der Prozesszustände und/oder der Prozessparameter verwendbar sind. Zu diesem Zweck ist die Steuer-Regeleinrichtung (2) mit dementsprechenden Kommunikationsmöglichkeiten ausgestattet.

## Beschreibung

Die vorliegende Erfindung betrifft ein Eingabesystem zur Eingabe von Prozessparametern einer Steuer/Regeleinrichtung nach Anspruch 1, ein Verfahren zur Eingabe von Prozessparametern einer Steuer/Regeleinrichtung nach Anspruch 7 und eine Steuer/Regeleinrichtung für ein solches Eingabesystem bzw. zur Durchführung eines solchen Verfahrens.

Die in Gebäuden zur Regelung von Brennern oder Klimaanlagen eingesetzten herkömmlichen Steuer-/Regelgeräte bzw. entsprechende Heizungsregler oder andere Geräte der Haustechnik werden mit Bedienoberflächen zur Bedienung durch den Endnutzer bzw. zur Bedienung für den Servicefachmann ausgerüstet. Diese Oberflächen beinhalten Anzeige-/Bedienfelder oder Tasten zur Programmierung bzw. Einstellung der entsprechenden Geräte, die verschiedene Systeme des Gebäudes steuern bzw. regeln. Darüber hinaus existieren Gebäudeleitsysteme, die ebenfalls über entsprechende Regler gesteuert und geregelt werden. In der Regel ist der Zugang zu verschiedenen Einstelimöglichkeiten der Regler für den Endnutzer beschränkt, während dem Fachmann sämtliche Programmiermöglichkeiten zur Verfügung stehen. Jedoch ist die Bedienung einer Vielzahl von Geräteparametern und Programmiermöglichkeiten häufig sehr umständlich, da die Bedienoberflächen der entsprechenden Steuer/Regelgeräte aus Kostengründen einfach ausgestaltet sind. Zu diesem Zweck ist bei diesen Geräten für die Bedienung durch den Fachmann ein Anschluss zum Anschliessen eines Computers, eines Laptops, eines Palmtops oder eines speziellen Servicegeräts vorgesehen, die den Zugang zu "tieferen" Bedienebenen zulassen und so dem Fachmann die Einstellung von Prozessparametern ermöglicht, die dem Endnutzer - auch aus Sicherheitsgründen - nicht zugänglich sind. Diese zum Teil sehr teuren und speziellen Geräte hat der Fachmann nicht immer zur Hand. Auch ist er gezwungen, sich jeweils zu den einzelnen Geräten zu begeben, um dort die notwendigen Einstellungen vorzunehmen.

Derartige Verfahren und Vorrichtungen sind für unterschiedliche Zwecke und Anwendungen bereits bekannt. So ist beispielsweise aus der WO 94 01 963 A1 ein System bekannt, das ein Mobiltelefon bzw. ein Telefon für zellulare Netze als Eingabemittel für die Aktivierung oder Deaktivierung von Alarmsystemen offenbart. Das System nutzt das zum Telefonieren nutzbare Mobiltelefon gleichzeitig als Gerät zur Übertragung von Zugangscodes für sicherheitsrelevante Systeme wie Garagen, Gebäude oder Sicherheitsbereiche von Industrieanlagen.

Aus der WO 97 44 946 A1 ist ein portables Datenterminal bekannt, das mit einer Funkeinheit zum Übertragen von Daten via Mobiltelefonnetze ausgestattet ist. Mittels eines LCD-Displays, einem Prozessor und einer Tastatur lassen sich bestimmte Daten, beispielsweise ein Telefax, übertragen. EP 0 662 665 A2 offenbart ein drahtloses Bankterminal unter Anwendung einer zellularen Fernsprechkommunikation, wobei über das Mobiltelefonnetz bankbezogene Transaktionen durchführbar sind.

Die WO 98 24 227 beschreibt eine Einrichtung, die mit einer Funkeinheit ausgestattet ist, die eine Datenkommunikation über das Funktelefonnetz ermöglicht, wobei diese Einrichtung zum Erfassen von Messdaten oder zur Abfrage von Elektrizitätszählern geeignet ist. Dabei sind auch Systeme bekannt, die den Anschluss eines Mobiltelefons gestatten, um Daten fern zu übertragen. Dabei sind die Mobiltelefone mit einer digitalen Schnittstelle ausgestattet, um für bsp. Laptops als "Modem" zu fungieren und die entsprechenden Daten zu übertragen.

Der vorliegenden Erfindung liegt daher die Aufgabe zugrunde, Eingabesysteme bzw. Verfahren zur Eingabe von Prozessparametern und entsprechende Steuer/Regelgeräte der vorgenannten Art dahingehend zu verbessern, dass zur Eingabe von Prozessparametern keine Zusatzgeräte mehr benötigt werden und trotzdem sämtliche Parameter einstell- bzw. einprogrammierbar sind und dies möglichst kostengünstig durchführbar ist.

Die vorliegende Erfindung löst die genannte Aufgabe durch ein Eingabesystem zur Eingabe von Prozessparametern einer Steuer/Regeleinrichtung, beispielsweise einer Heizungs- oder Klimaanlage oder mit dieser verbundener Komponenten, mit mindestens einer Kommunikationsschnittstelle eines Eingabegeräts zur Kommunikation mit einer Kommunikationsschnittstelle der Steuer/Regeleinrichtung, und mit Anzeige-/Bedienfelder, die sich am oder auf dem Eingabegeräts zur Anzeige und Eingabe unterschiedlicher Prozesszustände und/oder Prozessparameter befinden, wobei das Eingabegerät zusätzlich Mittel zur Übertragung von Daten per Funk über ein Funktelefonnetz aufweist. Diese Mittel sind an sich bekannte Schaltungen von Mobiltelefonen, auch Handys genannt, die über ein zellulares Netz miteinander über Basisstationen kommunizieren. Diese Kommunikation erfolgt bsp. über das GSM-Netz, welches in Frequenzbereichen zwischen 900 und 1900 Mhz operiert.

Das Eingabegerät ist über diese Mittel zur Übertragung von Daten per Funk einerseits als Telefon verwendbar und über die mindestens eine Kommunikationsschnittstelle oder die Mittel zur Übertragung von Daten per Funk durch die Steuer/Regeleinrichtung andererseits derart ansteuerbar, dass die Anzeige-/Bedienfelder zur Anzeige und Eingabe der Prozesszustände und/oder der Prozessparameter verwendbar sind.

Für die Bedienung der Geräte der Haustechnik beispielsweise kann dann an Stelle eines Servicegeräts dieses Eingabegerät in Form eines Mobiltelefons verwendet werden. Diese Telefone sind weit verbreitet und befinden sich im Besitz praktisch aller Servicetechniker und auch vieler Endnutzer. Diese Telefone besitzen bereits ein komfortables Textdisplay, bsp. die Siemens - Mobiltelefone, und eine Tastatur mit einem bedienerfreundlichen Menü. All dies ist für eine universelle Bedienung geeignet. Mit diesem Mobiltelefon ist nun die Funktion eines Textterminals realisierbar, d.h. das Handy dient dann ausschliesslich als Ersatz für die für jeden Regler meist unterschiedlichen Eingabemasken, Tastaturen und Programmiermenüs. Ein einheitliches Display, eine einheitliche Tastatur und ev. auch eine standartisierte Menüführung erleichtert dann die Programmierung der Regler, d.h. die Darstellung von Prozesszuständen, bsp. eines Heizungsreglers, und die Eingabe der entsprechenden Prozessparameter. Dadurch wird eine einheitliche und praktische Bedienung der Regler erreicht, da der Servicetechniker ohnehin sein Mobiltelefon stets mit sich trägt, es lassen sich zusätzlich Kosten einsparen, da die Regler nicht mehr mit Maschine-Benutzer-Schnittstellen ausgerüstet werden müssen und die Bedienoberflächen lassen sich vereinheitlichen. Es ist dadurch ein multifunktionales Gerät geschaffen worden, welches handlich ist und zusätzliche Servicegeräte für den Techniker oder Einstellgeräte für den Endnutzer obsolet macht.

Der Text, die Funktionalität der Tastatur des Handys und die Anzeige wird durch das Steuer- bzw. Regelgerät definiert. Nach Aufbau der Kommunikation erfolgt eine Umschaltung der Funktionalität des Mobiltelefons, wobei ev. eingehende Anrufe entweder unterdrückt, gespeichert oder durch ein Signal dargestellt werden. Auch die Bedienerführung in dem Handy wird durch das Steuer- Regelgerät erzeugt, wobei die Navigation zwischen den einzelnen Bedienebenen in der dem Mobiltelefonnutzer bekannten Art und Weise erfolgen kann. Das Handy hat dann lediglich Terminalfunktionen und stellt dem Regelgerät sozusagen seine Mensch-Maschine-Kommunikationsschnittstelle zur verfügung, an die der Nutzer bereits gewöhnt ist (bsp. das mehrmalige Drücken einer Taste zum Aufruf oder Quittieren bestimmter Funktionen). Dieses Eingabegerät in Form eines Mobiltelefons ist dann für alle Geräte, die eine Terminalfunktion benötigen (also auch Stereoanlagen, Fernseher, Alarmanlagen, etc..) verwendbar.

Die Steuer/Regeleinrichtung hat mindestens eine Kommunikationsschnittstelle zur Umschaltung des Eingabegeräts von einem Telefonmodus in einen Eingabemodus. Das Eingabegerät, das durch die Steuer/Regeleinrichtung derart ansteuerbar ist, dass es als Terminal zum Sichtbarmachen und Eingeben von Prozesszuständen und/oder Prozessparametern dient, weist Anzeige-/Bedienfelder auf, die sich sowohl zum Telefonieren als auch zur Programmierung der Steuer/Regeleinrichtung verwenden lassen.

Die Kommunikationsschnittstellen des Eingabegeräts und der Steuer/Regeleinrichtung weisen dabei Mittel zur Übertragung von Daten per Funk und/oder Kabel und/oder Infrarot auf. So ist auch die Aktivierung bzw. Deaktivierung das Eingabegeräts durch das Steuer/Regelgerät über das Funktelefonnetz möglich oder auch mittels eines Kabels, welches an die ohnehin bei den meisten Mobiltelefonen vorhandenen digitalen Schnittstellen anschliessbar ist. Durch die Aufnahme der Kommunikation über die entsprechenden Schnittstellen zwischen dem Eingabegerät und der Steuer- bzw. Regeleinrichtung wird entweder innerhalb des Mobiltelefons ein spezielles vom Mobiltelefonhersteller angebotens Prorokoll zum Austausch der Daten aktiviert, das zwischen den Herstellern solcher Steuer- bzw. Regeleinrichtungen standartisiert werden könnte oder es erfolgt eine direkte Ansteuerung der Anzeige-/Bedienfelder des Telefons durch die Steuer- bzw. Regeleinrichtung und die übrigen Funktionalitäten des Telefons werden abgeschaltet oder auf"Stand-By" geschaltet.

Die Erfindung definiert ebenfalls ein Verfahren zur Eingabe von Prozessparametern einer Steuer/Regeleinrichtung, insbesondere einer Heizungs- oder Klimaanlage oder mit dieser verbundener Komponenten, indem das Eingabegerät mit der Steuer/Regeleinrichtung kommuniziert, mittels Anzeige-/Bedienfelder des Eingabegeräts (1) unterschiedliche Prozesszustände und/oder die Prozessparameter angezeigt werden, und die Prozessparameter über die Anzeige-/Bedienfelder (6, 7) eingegeben werden, wobei, wie oben beschrieben, zur Eingabe der Prozessparameter ein Eingabegerät verwendet wird, das Daten per Funk über ein Funktelefonnetz, d.h. bsp. ein zellulares Netz überträgt.

Das Eingabegerät wird dann in einem ersten Modus als Telefon verwendet und bei Aufbau einer Kommunikation mit der Steuer/Regeleinrichtung in einen zweiten Modus gesetzt, in dem die Prozesszustände und/oder die Prozessparameter angezeigt und/oder eingegeben werden können. Die Kommunikation wird dabei über Kommunikationsschnittstellen aufgebaut, die Daten per Funk über ein zellulares Netz oder per Kabel oder mittels Infrarot zwischen dem Eingabegerät und der Steuer/Regeleinrichtung übertragen. Dazu wird das Steuer- bzw. Regelgerät mit diesen entsprechenden Kommunikationschnittstellen ausgerüstet, uni mit dem Mobiltelefon, d.h. dem erfindungsgemässen Eingabegerät, zu kommuniziern.

Die Prozesszustände und/oder die Prozessparameter werden nach dem Aufbau der Kommunikation durch die Steuer/Regeleinrichtung aufdas Eingabegerät übertragen, bsp. im SMS-Modus (short message service) oder digital packetweise oder durch eine beliebige andere Kommunikationsmöglichkeit mit den entsprechend bekannten Protokollen, und die Anzeige-/Bedienfelder des Eingabegeräts werden mit den zur Veränderung der Prozesszustände und/oder der Prozessparameter notwendigen Funktionen durch die Steuer/Regeleinrichtung unterlegt, d.h. das Steuer-/Regelgerät übernimmt die Definition der einzelnen Funktionen des Handys.

Die Prozessparameter lassen sich dabei durch variable Anzeige-/Bedienfelder eingegeben, die jeweils nur den Teil des Prozesses betreffen, der durch die entsprechende, mittels der Anzeige-/Bedienfelder auswählbaren und durch Kommunikation mit der Steuer/Regeleinrichtung einstellbaren Bedienebene ausgewählt wird. Diese Anzeige-Bedienfelder können auch sog. "Touch-Screens" sein, d.h. berührungsempfindliche Oberflächen, die über sich darunter befindliche Displays mit entsprechenden Funktionen versehen werden.

Die Steuer/Regeleinrichtung für das erfindungsgemässe Eingabesystem bzw. zur Durchführung des erfindungsgemässen Verfahrens weist Kommunikationsmittel zur Umschaltung des Eingabegeräts von dem Telefonmodus in den Eingabemodus auf Dies kann durch die Ausstattung der Steuer/Regeleinrichtung mit einem Sender/Empfänger für das zellulare Netz realisiert werden, oder über eine digitale Kommunikationsschnittstelle, die über Kabel mit der digitalen Schnittstelle des Eingabegeräts verbunden wird. Vorteilhafterweise kann das portable Eingabegerät, sofern es mit Akkumulatoren ausgerüstet ist, während der Kommunikation von der Steuer/Regeleinrichtung geladen werden. Die Kommunikationsmittel können dabei über eine zentrale Rechnereinheit der Steuer/Regeleinrichtung angesteuert werden, die das Eingabegerät als Terminal zur Eingabe von Daten nutzt. Diese Rechnereinheiten sind in den meisten Steuer/Regelgeräten ohnehin bereits vorhanden, um den Prozess las solche szu regeln, bzw. zu steuern.

Gerade bei Heizungsanlagen kann dieses System bevorzugt eingesetzt werden, da die Regler solcher Anlagen ohnehin nur selten bedient werden und diese Bedienung meist auch schwierig und umständlich ist, so dass hier der Endnutzer seine Heizungsanlage bsp. aus dem Wohnzimmer oder seinem Büro mittels seines Mobiltelefons einstellen kann. Selbst bevor er bsp. von der Arbeit nach Hause fährt, kann er seine Heizung einschalten, so dass es bereits warm ist, wenn er zu Hause eintrifft. Zu diesem Zweck eignet sich besonders die erfindungsgemässe Steuer-/Regeleinrichtung zum Einsatz in dem erfindungsgemässen Eingabesystem bzw. für das entsprechende Verfahren.

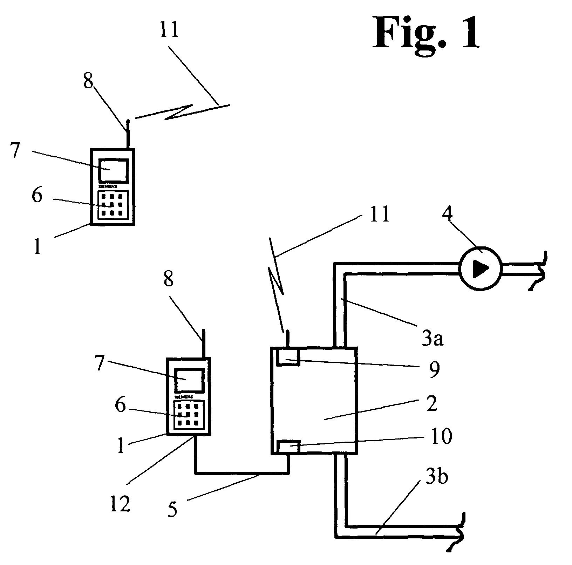

Ein bevorzugtes Ausführungsbeispiel des erfindungsgemässen Eingabesystems bzw. des erfindungsgemässen Verfahrens mit dem entsprechenden Steuer/regelgerät wird anhand der nachfolgenden Fig. 1 näher erläutert:
Fig. 1 zeig das Steuer- bzw. Regelgerät 2, welches beispielsweise den Heizkreislaufeiner Heizungsanlage steuert bzw. regelt, d.h. die Zu- bzw. Abführung von Heizungswasser über entsprechende Leitungen 3a und 3b. Eine Pumpe 4 pumpt dabei das Wasser in die einzelnen Heizkörper des Hauses.

Das Steuer- bzw. Regelgerät 2 ist mit zwei optionalen Kommunikationsschnittstellen ausgerüstet. In einer Ausführungsform der Erfindung befindet sich am Steuer- bzw. Regelgerät 2 eine digitale Schnittstelle 10, die mittels eines Kabels 5 mit dem Eingabegerät 1 kommuniziert. Ebenfalls kann eine Funkschnittstelle 9 vorgesehen sein, die die Kommunikation mit dem Eingabegerät 1 über das zellulare Netz herstellt und dementsprechend das Eingabegerät 1, also ein Mobiltelefon beispielsweise, in den Eingabemodus schaltet.

Das Eingabegerät 1 besteht aus einem Gehäuse, welches sowohl Eingabefelder 6 als auch Anzeigefelder 7 aufweist. Mittels der digitalen Schnittstelle 12 des Eingabegeräts 1 lässt sich die Verbindung über das Kabel 5 mit der digitalen Schnittstelle 10 des Steuer- bzw. Regelgeräts 2 herstellen, mittles der Funkschnittstelle 8 des Eingabegeräts lässt sich die Funkverbindung über das zellulare Netz mit der Funkschnittstelle 9 des Steuer- bzw. Regelgeräts 2 aufbauen. Die Funkwellen 11 stellen symbolisch das bekannte Prinzip der Funkübertragung im Mhz-Bereich dar, welche an dieser Stelle nicht näher erläutert werden soll. Natürlich kann die Kommunikation über den sog. SMS-Modus erfolgen, auch der Page-Modus ist denkbar, der lediglich Nachrichten in eine Richtung schickt. Dies könnte beispielsweise die Meldung des Steuer- bzw. Regelgeräts 2 sein, dass eine Systemanforderung zur Programmierung des Reglers oder eine Fehlermeldung vorliegt, die dem Nutzer bzw. dem Servicemann eine bestimmte Handlung abverlangt.

## Patentansprüche

1. Eingabesystem zur Eingabe von Prozessparametern einer Steuer/Regeleinrichtung (2), insbesondere einer Heizungs- oder Klimaanlage oder mit dieser verbundener Komponenten, mit mindestens einer Kommunikationsschnittstelle (8, 12) eines Eingabegeräts (1) zur Kommunikation mit einer Kommunikationsschnittstelle (9, 10) der Steuer/Regeleinrichtung (2), und mit Anzeige-/Bedienfelder (6, 7) des Eingabegeräts (1) zur beige und Eingabe unterschiedlicher Prozesszustände und/oder Prozessparameter,
**dadurch gekennzeichnet,**
dass das Eingabegerät (1) Mittel (8) zur Übertragung von Daten per Funk über ein Funktelefonnetz aufweist.

2. Eingabesystem nach Anspruch 1,
**dadurch gekennzeichnet,**
dass das Eingabegerät (1) über die Mittel (8) zur Übertragung von Daten per Funk einerseits als Telefon verwendbar ist und über die mindestens eine Kommunikationsschnittstelle (8, 12) oder die Mittel (8) zur Übertragung von Daten per Funk durch die Steuer/Regeleinrichtung (2) andererseits derart ansteuerbar ist, dass die Anzeige-/Bedienfelder (6, 7) zur Anzeige und Eingabe der Prozesszustände und/oder der Prozessparameter verwendbar sind.

3. Eingabesystem nach Anspruch 1 oder 2,
**dadurch gekennzeichnet,**
dass die Steuer/Regeleinrichtung (2) mindestens eine Kommunikationsschnittstelle (9, 10) zur Umschaltung des Eingabegeräts (1) von einem Telefonmodus in einen Eingabemodus aufweist.

4. Eingabesystem nach einem der vorhergehenden Ansprüche,
**dadurch gekennzeichnet,**
dass das Eingabegerät (1) ein Mobiltelefon ist, das durch die Steuer/Regeleinrichtung (2) derart ansteuerbar ist, dass es als Terminal zum Sichtbarmachen und Eingeben von Prozesszuständen und/oder Prozessparametern dient.

5. Eingabesystem nach einem der vorhergehenden Ansprüche,
**dadurch gekennzeichnet,**
dass die Anzeige-/Bedienfelder (6, 7) sowohl zum Telefonieren als auch zur Programmierung der Steuer/Regeleinrichtung (2) verwendbar sind.

6. Eingabesystem nach einem der vorhergehenden Ansprüche,
**dadurch gekennzeichnet,**
dass die Kommunikationsschnittstellen (8, 12; 9, 10) des Eingabegeräts (1) und der Steuer/Regeleinrichtung (2) Mittel zur Übertragung von Daten per Funk und/oder Kabel und/oder Infrarot aufweisen.

7. Verfahren zur Eingabe von Prozessparametern einer Steuer/Regeleinrichtung (2), insbesondere einer Heizungs- oder Klimaanlage oder mit dieser verbundener Komponenten, indem ein Eingabegerät (1) mit einer Steuer/Regeleinrichtung (2) kommuniziert, mittels Anzeige-/Bedienfelder (6, 7) des Eingabegeräts (1) unterschiedliche Prozesszustände und/oder die Prozessparameter angezeigt werden, und die Prozessparameter über die Anzeige-/Bedienfelder (6, 7) eingegeben werden,
**dadurch gekennzeichnet,**
dass zur Eingabe der Prozessparameter ein Eingabegerät (1) verwendet wird, das Daten per Funk über ein Funktelefonnetz überträgt.

8. Verfahren nach Anspruch 7,
**dadurch gekennzeichnet,**
dass das Eingabegerät (1) in einem ersten Modus als Telefon verwendet wird und bei Aufbau einer Kommunikation mit der Steuer/Regeleinrichtung (2) in einen zweiten Modus gesetzt wird, in dem die Prozesszustände und/oder die Prozessparameter angezeigt und/oder eingegeben werden können.

9. Verfahren nach Anspruch 7 oder 8,
**dadurch gekennzeichnet,**
dass die Kommunikation über Kommunikationsschnittstellen aufgebaut wird, die Daten per Funk über ein zellulares Netz oder per Kabel oder mittels Infrarot zwischen dem Eingabegerät (1) und der Steuer/Regeleinrichtung (2) übertragen.

10. Verfahren nach einem der Ansprüche 7 - 9,
**dadurch gekennzeichnet,**
dass die Prozesszustände und/oder die Prozessparameter durch die Steuer/Regeleinrichtung (2) auf das Eingabegerät (1) übertragen werden und die Anzeige-/Bedienfelder (7) des Eingabegeräts (1) mit den zur Veränderung der Prozesszustände und/oder der Prozessparameter notwendigen Funktionen durch die Steuer/Regeleinrichtung (2) versehen werden.

11. Verfahren nach einem der Ansprüche 7 - 10,
**dadurch gekennzeichnet,**
dass die Prozessparameter über variable Anzeige-/Bedienfelder (7) eingegeben werden, die jeweils nur den Teil des Prozesses betreffen, der durch die entsprechende, mittels der Anzeige-/Bedienfelder (7) auswählbaren und durch Kommunikation mit der Steuer/Regeleinrichtung (2) einstellbaren Bedienebene ausgewählt wird.

12. Steuer/Regeleinrichtung für ein Eingabesystem nach einem der Ansprüche 1 - 6 oder zur Durchführung eines Verfahrens nach einem der Ansprüche 7 - 11,
**gekennzeichnet durch**
Kommunikationsmittel (9, 10) zur Umschaltung des Eingabegeräts (1) von einem Telefonmodus in einen Eingabemodus.

13. Steuer/Regeleinrichtung nach Anspruch 12,
**dadurch gekennzeichnet,**
dass die Kommunikationsmittel (9, 10) über eine zentrale Rechnereinheit der Steuer/Regeleinrichtung angesteuert werden, die das Eingabegerät (1) als Terminal zur Eingabe von Daten nutzt.
